# EUROPEAN PATENT APPLICATION

(11) **EP 4 726 544 A1**
(43) Date of publication of application: **15.04.2026**
(21) Application number: 24205298.3
(22) Date of filing: 08.10.2024
(51) Int. Cl.: G06F 9/48

(54) **METHOD TO EXECUTE TIME-TRIGGERED TASKS IN A COMPUTER SYSTEM WITH FLEXIBLE EXECUTION INTERVALS**

(71) Applicant: TTTech Computertechnik Aktiengesellschaft, 1040 Wien (AT)
(72) Inventor: Matl, Piotr, 1040 Wien (AT); Craciunas, Silviu, 1100 Wien (AT); Serna Oliver, Ramon, 1210 Wien (AT)
(74) Representative: Patentanwaltskanzlei Matschnig & Forsthuber OG

(57) **Abstract**

A method to execute jobs of a set of tasks in a computer system according to a global time-triggered schedule, wherein the computer system comprises one or more cores on one or more central processing units of the computer system, -wherein said global time-triggered schedule comprises one time-triggered schedule, "core schedule", for each of said cores, wherein the tasks of the set of tasks to be executed on a specific core are executed on said core according to the core schedule of said core. The core schedule specifies for each job a flexibility interval, wherein the duration of the flexibility interval of a job is equal or longer than the execution interval of said job, wherein at least the flexibility interval of one job is longer than the execution interval of said job, wherein the flexibility interval of a job starts no later than the release point of the execution interval of said job, and wherein the flexibility interval of a job ends no sooner than the completion point of the execution interval of said job, wherein the flexibility of a job defines a time interval during which said job can be executed, and wherein runtime dispatching means are provided, which select and launch jobs for execution according to the global time-triggered schedule, taking into account for each core all flexibility intervals as specified in the core schedule.

## Description

The present invention relates to a method to execute jobs of a set of tasks in a computer system according to a global time-triggered schedule,
- wherein the computer system comprises one or more cores on one or more central processing units of the computer system,
- wherein said global time-triggered schedule comprises one time-triggered schedule, "core schedule", for each of said cores, wherein the tasks of the set of tasks to be executed on a specific core are executed on said core according to the core schedule of said core,
- wherein the global time-triggered schedule specifies a cycle with a cycle length for the set of tasks,

wherein the core schedule of a core specifies for each task of the set of tasks, which is to be executed on said core:
   - an execution interval for each task instance, "job", of the task, during which execution interval the job can be executed, wherein each execution interval comprises a release point, at which the execution interval starts, and a completion point, at which the execution interval ends, wherein the duration of an execution interval is the duration of the time span between the release point and the completion point of the execution interval, wherein the execution interval of a job defines a time interval during which the job has a guarantee to be executed on the core, and
   - a period according to which period the jobs of said task are executed on the core,
      ∘ wherein the execution interval of each job of the task is iterated cyclically according to the cycle, and
wherein the execution intervals of any two jobs of the same and of different tasks do not overlap, and
wherein the cycle is a common multiple of all periods of all tasks in the set of tasks.

The execution of periodic jobs of software tasks following a time-triggered paradigm has been studied in literature and employed in industry for many years. Among its benefits, stands out the deterministic timely execution of the jobs of software tasks in a cyclic manner, generally driven by an offline-computed schedule (the tt-schedule) allowing a correctness-by-design methodology. Moreover, tt-schedules can be computed based on optimization objectives that are hard to reach with other paradigms, like minimizing job-level jitter or fulfilling complex job interdependencies.

However, it is also known that the time-triggered paradigm offers little to no flexibility in terms of dynamically adapting to changes in the runtime behavior of software jobs. This lack of adaptation may be an asset for critical systems requiring an exact and deterministic behavior over time, but it may also reduce the capability to maximize the usage of resources in systems with less stringent determinism requirements.

Prior to computing a tt-schedule, software tasks must be characterized, particularly with respect to their timeliness requirements, like required execution time and execution rate (i.e., period). A common objective of the time-triggered paradigm is to compute the tt-schedule based on the worst-case timeliness bounds, like the worst-case execution time and lowest execution rate. Once the tt-schedule is constructed, it is cyclically enforced at runtime by a dispatching mechanism. Accounting for the worst-case guarantees that any change in the behavior of the jobs of a task during runtime will not exceed the system capacity, and hence the execution correctness remains guaranteed.

However, in modern computer systems, particularly automotive computer systems, it is typically an objective to maximize the utilization of hardware components, like CPU and memory since any unused resource would be preferably scaled down at design time to reduce production costs and overall power consumption.

These two objectives often conflict with each other and cannot be trivially solved. Indeed, adding flexibility to the time-triggered paradigm enabling the adaptation to runtime changes in the execution timeliness of the periodic jobs of tasks while conserving determinism and correctness guarantees is a challenge.

### Time-Triggered Scheduling

Existing time-triggered scheduling methods plan the execution of software tasks in defined CPU cores by computing one or multiple execution intervals for each periodic job of said software task in one or multiple of said CPU core(s), in accordance with a defined set of scheduling constraints.

An execution interval comprises a start time and a duration for which the assigned CPU core(s) will exclusively execute the assigned job of said software tasks.

A computed tt-schedule is typically represented in the form of a timetable containing a list of computed intervals with the assignment of jobs and CPU core(s).

The computation of a tt-schedule is based on defined scheduling constraints determining the correct relation between execution intervals conforming a valid tt-schedule. For example, an execution interval cannot be assigned to multiple jobs, as it would result on a single resource (the CPU core) required to execute the instructions of two jobs simultaneously, which is not feasible. As another example, different execution intervals on the same CPU core cannot overlap, as this would again result in multiple jobs planned to execute simultaneously on the same CPU core, hence invalidating the guaranteed reservation of execution time for each individual job.

### TT scheduling constraints

A computer system comprises one or more hosts, each of which comprises one or more CPU cores.

A software application consists of one or more periodic software components, or tasks. Each task is characterized by their period, an earliest release time, and a deadline- A task is cyclically executed on a core according to its period, bearing a sequence of task execution instances, or jobs.

A tt-schedule is computed according to general correctness constraints for TT scheduled found in literature, e.g., [1], and summarized here for completeness. The computation of a tt-schedule relates to computing execution intervals for each periodic job of a software task within a defined schedule cycle, wherein said computation conforms to defined scheduling constraints, including, but not limited to:
*Start constraint:* The start of the execution of any job of a software task swᵢ must be after the given earliest release time eᵢ in each period pᵢ.
*Deadline constraint:* The end of the execution of any job of a software task swᵢ must be before the given deadline dᵢ in each period pᵢ.
*Non-overlap constraint:* No two jobs of any tasks can execute at the same time on the same core.
*Dependency constraints*: Other requirements further restricting the interrelation of software tasks introduce additional dependency constraints when computing the tt-schedule. For example, in some cases functional correctness requires that the execution of a job of a first software task shall occur, in all cycles, following the execution of a job of a second software task. In other cases, the order of execution of jobs of a group of software tasks may conform to a directed acyclic graph (DAG), whereby within a certain maximum interval of time the jobs of the first and last software tasks of the DAG shall complete their execution. These additional dependency constraints may be categorized as simple dependency constraints, or complex dependency constraints, depending on the complexity of said interrelation.

Tasks may have either simple or complex dependencies. A dependency comprises two or more tasks, wherein a defined order of execution between jobs of said tasks are specified, wherein
- in a simple dependency all of said comprised tasks have the same period, whereas
- in a complex dependency at least two of said comprised tasks have different period.

In addition, simple and complex dependencies relate to a maximum latency constraint, wherein said maximum latency can be one of the following
- a maximum response time, specifying that for all jobs of the first task in the set of defined tasks, there exists a trace of successor jobs following a defined order, through all other intermediary jobs of tasks in the set, such that the trace does not take longer than said response time,
- a maximum data age, specifying that for all jobs of the last task in the set of tasks according to the defined order, there exists a trace from some jobs of the first task in the set of tasks, going through jobs of all other intermediary tasks in the set, whereby said trace does not take longer than said data age.

*Jitter constraint*: For every job of a task, there is a non-negative delay between the scheduled start and the earliest release time; the jitter constraint defines a maximum permitted difference between said delays for any pair of jobs of a task.

It is known that the construction of a tt-schedule is a computationally intense operation that cannot be solved optimally within reasonable time for large systems [2, 3]. Approximative heuristic algorithms have been used in the past and perform reasonably well on average cases [4].

### Runtime execution variability

In some cases, the sequence of jobs of a task may exhibit different run-time execution requirements along their cyclic execution iterations, due for example to differences over time in the data they need to process. This run-time variability can be addressed when computing a tt-schedule by assuming the worst-case runtime (worst-case computation time, or WCET) for each job of a software task, hence planning the amount and length of execution intervals sufficient to satisfy said worst-case behavior (e.g., largest execution path).

An advantage of a time-triggered scheduling paradigm is the deterministic and timely behavior of the executed jobs of software tasks during runtime, regardless of their cyclic variation in the execution requirements, typically resulting in only minimal deviations between cycles (e.g., due to unavoidable runtime inaccuracy introduced by uncertainties of the underlying hardware and software components).

### Runtime adaptability

In the general case, the construction during design-time of the tt-schedule prevents exercising runtime adaptations to the dynamic variability of the jobs of software tasks and can be a disadvantage of the time-triggered scheduling paradigm. For example, when a job of a software task does not require a complete execution interval within a cycle, the remaining time (slack) cannot be easily reassigned to the jobs of the next software tasks in the tt-schedule.

Another related disadvantage of a time-triggered scheduling paradigm is the overprovisioning caused by assuming a worst-case bound for the timeliness of software tasks, in particular a WCET, when computing the timetable, hence assigning larger execution intervals than on average required during execution, since during runtime, jobs often require less execution time than the WCET of their respective task.

Some existing methods address the negative effects of overprovisioning due to the WCET by computing a tt-schedule with consideration of lower bounds, for example the average execution time, instead of the WCET, for certain tasks [5], whereby if jobs of said tasks exceed their assigned execution interval in any of its cycles, they may be interrupted and not accomplish their execution in the current cycle, or in some cases, jeopardize jobs of other software tasks by exceeding their planned execution interval.

Other existing methods allow the computer system to exchange its configuration during runtime among a set of alternative precomputed tt-schedules (e.g., referred as "modes") [6]. These methods try to estimate at design time the variability that will be observed during runtime and compute dedicated tt-schedules adapted to these conditions. This adaptation of the configuration is commonly known as performing a system mode change. In these methods, the number of supported modes are limited by two factors: on one hand the number of possible system states (observable variability) resulting on the need of a different tt-schedule grows exponentially with the size of the system (e.g., number of CPU cores, number of software tasks, number of constraints), and hence only a fraction of them can be feasibly stored in the computer system for future use (e.g., due to limited memory capacity); on the other hand, a system mode change cannot be applied instantaneously and may require complex algorithms to guarantee system stability at runtime during the transition, hence adding latency and limiting the adaptability chanced in a deployed running system.

Yet other existing methods include mechanisms to dynamically modify the computed tt-schedule during runtime [9, 10], in response to an actual state of the system. These methods are limited by the computation complexity of the constraints involved in the fast (re)computation of a new tt-schedule, typically within one, or few, execution cycles. Hence, the employed algorithms cannot handle large numbers of constraints, or fulfill all constraints within a sufficiently fast response time. In addition, safety and certification concerns arise when dynamic changes may negatively affect the timely execution of jobs related to safety-critical tasks, for example those in deployed automotive or industrial applications. Therefore, the modification of timetables at runtime has a limited use in real-world use-cases.

### Operating System/Runtime System dispatcher

An active module, typically a software component, is provided in the computer system, which module orchestrates the execution of software tasks by selecting, at defined instants of time, jobs of tasks from a set of ready jobs and dispatching them for execution in one or more of the CPU cores in the computer system. This active module, the dispatcher (or dispatching means), is the runtime component enforcing the decisions made by the scheduler and may be implemented in a computer system in different forms, for example as a stand-alone runtime software component, as a module of an operating system, or as a high-level software stack.

Usually, one such active module is provided. However, it may also be possible that two or more such active modules are provided.

In a computer system implementing a time-triggered paradigm, the dispatcher selects jobs for execution based on the tt-schedule. Once a job is dispatched, the dispatcher waits until the end of the execution interval of said job and proceeds to select the next job following the order and timing defined in the tt-schedule (i.e., timetable).

In computer systems implementing other scheduling paradigms, the dispatcher may select jobs of software tasks for execution based on defined criteria. For example, in computer systems implementing an earlier deadline first (EDF) paradigm the dispatcher selects for execution the jobs with the nearest deadline from the set of ready jobs. In contrast, in a computer system implementing a fixed priority (FP) paradigm, software tasks are characterized by a defined and fixed priority, whereby the dispatcher selects for execution the jobs of software task with the highest defined priority from the set of ready jobs. When the dispatched job yields, or new jobs become ready, the dispatcher may select and launch a new job based on the same criteria.

It is an object of the invention to optimize the usage of resources, in particular of CPU time and/or core time in a computer system in which jobs of periodic tasks are executed according to a time-triggered schedule.

This is achieved with a method according to claim 1, wherein the core schedule specifies for each job a flexibility interval, wherein the duration of the flexibility interval of a job is equal or longer than the execution interval of said job, wherein
at least the flexibility interval of one job is longer than the execution interval of said job, wherein
the flexibility interval of a job starts no later than the release point (start point, start/release instant) of the execution interval of said job, and wherein
the flexibility interval of a job ends no sooner than the completion point (end point, end/completion instant) of the execution interval of said job, wherein
the flexibility of a job defines a time interval during which said job can be executed, and wherein

runtime dispatching means are provided, which select and launch jobs for execution according to the global time-triggered schedule, taking into account for each core all flexibility intervals as specified in the core schedule.

The periodic execution of tasks within the schedule cycle comprises one or more executions of task instances, or jobs, of said tasks represented by one said element in the timetable, wherein each job corresponds to an execution of the task according to its periodicity, repeated cyclically according to the schedule cycle. If the task period is equal to the schedule cycle, there is one single job of said task within the schedule cycle, whereas if the schedule cycle is larger than the period, there are multiple jobs of said task according to the relation between the period and the schedule cycle. Note that the length of the schedule cycle preferably is a common multiple of the period of all tasks, for example, the least common multiple. If, for example, the period of a task is 10 and the cycle is 20, there will be two instances of the task ("jobs") within the cycle. Each of them will have its own intervals within their respective period interval (from 0..10, and 10..20), and the flexibility intervals may even be of different length and belong to a different one of the three subsets, which subsets will be explained below.

According to the invention, flexibility intervals are provided for each job, whereby the flexibility interval of a job fully overlaps the execution interval of this job and is equal or larger than its execution interval. This makes it possible for the runtime dispatching means to organize the execution of jobs more flexibly in terms of time and thus to make better use of the available resources, in particular to allow a better usage of the time of each core.

As mentioned, the invention requires that at least the flexibility interval of one job is longer than the execution interval of said job. For an optimal effect of the invention, it is advantageous that the flexibility intervals of several jobs, in particular of a plurality of jobs, preferably of all jobs are longer than the corresponding execution intervals.

In a general case, a method to compute tt schedules relates to deciding a valid placement on a timeline for each execution interval of each job to be scheduled, subject to defined scheduling constraints defining the schedulability bounds, bounds, for the correct placement of said intervals. Once a tt-schedule is computed, said constraints are implicitly fulfilled by the provided execution intervals conforming the schedule. The placement of the execution interval of each job is bounded by the limits imposed by the defined scheduling constraints. However, in the computation process, multiple decisions are possible within said bounds, resulting in alternative but equivalently correct tt-schedules.

For example, a periodic job subject to a deadline constraint may be scheduled arbitrarily within the interval bounded by the period start and the relative deadline, provided periodicity and deadline are the only constraints to be fulfilled. By exercising a decision to fix the execution interval of the job, the scheduling process selects one of multiple possible correct execution intervals for said job.

In some cases, early decisions made during the computation of a tt-schedule affect later decisions related to other jobs. For example, when jobs are subject to dependency constraints, any decision affecting the execution interval of a precedent job affects the decision of a successor job, since the dependency mandates that the successor job can only be scheduled after the execution interval of the predecessor job, hence tightening the lower bound to the execution interval of the successor job.

Some methods to compute tt-schedules apply a simple policy to select the start of execution intervals base on the lower bound when deciding the placement of the execution interval of each job, i.e., scheduling jobs as soon as possible. Alternatively, other methods apply a policy to select the end of the execution interval based on the upper bound when deciding the placement of the execution interval of each job, i.e., scheduling jobs as late as possible. More complex methods select arbitrary values between said bounds when deciding the placement of the execution interval of each job, based on additional defined criteria.

It may be provided that a method to compute tt-schedules is extended to keep track and update the schedulability bounds for each job, by iteratively adjusting the upper and lower bounds of all jobs upon each scheduling decision. It may be also provided that said extended method, after computing the tt-schedule, additionally computes flexibility intervals for each job based on said upper and lower schedulability bounds, wherein for each job, the start of its flexibility interval corresponds to the lower schedulability bound, and the end of its flexibility interval corresponds to the upper schedulability bound.

It may also be provided a method to derive schedulability bounds based on an existing tt-schedule and the set of scheduling constraints, wherein said method computes upper and lower bounds for each execution interval, subject to the set of defined scheduling constraints. For example, an iterative method may initiate the flexibility interval of a first job from the tt-schedule to the interval corresponding to its execution interval and iteratively increase it while checking that the set of defined constraints are still fulfilled. Once at least on constraint is not fulfilled, the flexibility interval for said first job is fixed to that of the previous iteration and a next job is selected as first job until all jobs have been provided a flexibility interval.

It may be provided that among the jobs of those tasks of the set of tasks that are to be executed on the core at least one first subset of jobs is provided, wherein for the jobs of said at least one first subset the core schedule specifies flexibility intervals which do not overlap with each other, wherein at least one of the flexibility intervals of a job is longer than the execution of said job.

This first case, in which jobs which comprise a flexibility interval are jobs with flexibility intervals following the rules of said first subset, maximally simplifies the runtime behavior of the dispatcher.

Alternative or in addition it may be provided that among those tasks of the set of tasks that are to be executed on the core at least one second subset of jobs is provided, wherein for the jobs of said at least one second subset the core schedule specifies flexibility intervals so that the flexibility intervals of two or more jobs of said at least one second subset of jobs are identical, i.e., for said two or more jobs of said at least one second subset the start instant of their flexibility intervals is the same instant *and* the end instant of their flexibility intervals is the same instant. For example, at least one of the flexibility intervals of a job is longer than the execution of said job.

This second case, in which jobs which comprise a flexibility interval are jobs with flexibility intervals following the rules of said second subset, also allows a simplified runtime behavior of the dispatcher, as it may be provided that the jobs of this second subset can be executed in any arbitrary order within said interval.

Alternative or in addition it may be provided that among those tasks of the set of tasks that are to be executed on the core at least one third subset of jobs is provided, wherein the flexibility intervals of any two jobs of said at least one third subset partially overlap. For example, at least one of the flexibility intervals of a job is longer than the execution of said job

This third case, in which jobs which comprise a flexibility interval are jobs with flexibility intervals following the rules of said third subset, adds the most complexity to the runtime dispatching means.

In this context it is noted that the subsets as described are self-contained, meaning that for those jobs with overlapping intervals the overlap must be between jobs of the same set (i.e., not with a job which is in one of the other sets).

The non-overlapping subset (first subset, subset 1) is the most restrictive subset: for a job to be in this subset its flexibility intervals shall not overlap with any flexibility interval of any other job of this subset. If there is an overlap between flexibility intervals of two jobs, both overlapping jobs are not part of the first subset.

Next is the second subset (subset 2) with identical flexibility intervals. Flexibility intervals of a jobs of this subset shall overlap only with flexibility intervals of other jobs with identical flexibility interval. If there is an overlap with a non-identical flexibility interval, then again both jobs cannot be in the second subset.

Any other combination of flexibility intervals refers to tasks of the third subset.

In the invention, tasks from at least one subset must be present, wherein said at least one present subset contains at least one flexibility interval which is longer than the corresponding execution interval. However, jobs from two or even three subsets may also be present. The dispatching means must be configured to be able to handle jobs from the subsets present. Typically, a dispatcher is provided which can handle jobs from all subsets, but it is also possible for the dispatching means to comprise a separate dispatcher for each of the present subsets.

It should be noted that there can be more subsets of each type. For example, there could be two different subsets of the "type" subsets 1, one with 3 jobs, one with 5, wherein all 3 jobs of the first subset 1 overlap with each other, and all 5 jobs of the second subset 1 overlap with each other, but none of the 3 jobs overlap with none of the 5 jobs.

Regarding a dispatching policy applied by the dispatching means, the different possible cases (case 1 - case 3) connected to the subsets of jobs (subset 1 - subset 3) described above will be described in the following.

For completeness, a "case 0" is described here, which may occur, since jobs can still be present which have "rigid" execution intervals and no flexibility intervals, which must also be processed by the dispatching means. The dispatching policy in this case is as follows: the runtime dispatching means will iterate over the timetable while keeping track of the progress of time in relation to the cycle. The dispatching means (also called "dispatcher") will compare the current time with the instants of time defining the start and end of each execution interval, which will be sorted increasingly in the timetable. The following rules describe the behavior of the runtime dispatcher in case 0:
- At the beginning of an execution interval, the respective job will be selected and launched to execute. If another job is being executed it will be preempted (i.e., interrupted).
- At the end of said execution interval, if the job is still running, the job will be stopped and a new job will be selected as above.
- If no execution interval exists for an interval of time (e.g., a gap in the timetable), the dispatcher will yield and wait until the next execution interval.
- If a job finishes execution before the end of its execution interval, the dispatcher will yield.

According to case 1 (non-overlapping flexibility intervals) it may be provided that for jobs of the at least one first subset of task jobs the runtime dispatching means act according to the following rules:
▪ if the current time is within the flexibility interval of a job, said job
   ∘ will be launched to execute, if the core for said job is idle, i.e., no job is executing, and
   ∘ if the core for said job is not idle, i.e., another job is executing, said selected job will be launched to execute at the instant of time that occurs first among the following:
      ▪ instant of time at which the core for said job becomes idle, or
      ▪ the current time reaches the start of the execution interval of the selected job.

The runtime dispatcher according to this case 1 will iterate over the timetable while keeping track of the progress of time in relation to the cycle. The dispatcher will compare the current time with the instants of time defining the start and end of each flexibility interval, which will be sorted increasingly in the timetable.

In the case of a not idle (processing) core, the job will in any event start at the release point of its execution interval. At the end of a flexibility interval, if the job is still running, the job will be stopped. If the instant corresponds to the start of the flexibility interval of another job, said job will be selected as described above.

If no flexibility interval exists for an interval of time (e.g., a gap in the timetable), the dispatcher (= runtime dispatching means) will yield until the next flexibility interval. Yields refers to giving away the control over the CPU or core since the dispatcher has nothing to do (there is no job that can be executed now).

If all jobs finish execution before the end of its flexibility interval, the dispatcher will yield until the next flexibility interval.

In general, the execution interval defines a guaranteed interval, but it is superseded by the flexibility interval to select and launch jobs for their execution. Therefore, the execution time of jobs may be larger than that of their execution intervals, which is an advantage in cases when the exact worst-case execution time of the task is not known, or it is underestimated for one or all jobs of said task, or those cases in which a job may eventually overrun.

Also in the general case, there is the possibility that another dispatcher is taking control and selecting other jobs of other tasks to execute in the "gaps" of the tt-schedule (i.e., when the tt-schedule "yields"). Therefore, when a job of a task in the tt-schedule is to be scheduled according to the dispatcher of the invention, there could be already a job of "another" task running, which can be either one in the sets of tasks related to the tt-schedule, or some other task related to some other dispatcher.

When such additional dispatchers are (for example hierarchically) active in the computer system, the execution of jobs of other tasks, for example fixed priority tasks, may occur within the flexibility interval of a selected job, up to, at most, the beginning of the execution interval.

In such case, advantages of the invention are:
▪ allowing jobs of other tasks, for example fixed priority tasks, to execute without jeopardizing the guaranteed execution interval of the tasks provided by the tt-schedule, and
▪ allowing jobs of the tasks in the tt-schedule to execute as soon as the processing core remains idle within their flexibility interval, but not later than the instant in which the execution interval starts, and
▪ allowing jobs of the task in the tt-schedule to execute until the end of its flexibility interval.

According to case 2 (strictly overlapping flexibility intervals) it may be provided that
for jobs of the at least one second subset of task jobs the runtime dispatching means act according to the following rules:
▪ if the current time is within one or multiple flexibility intervals, a selection of one of the jobs for which said flexibility interval is equivalent will be performed based on one of the following defined criteria:
   ∘ the job with the earliest execution interval will be selected and launched to execute, or
   ∘ the job with the shortest execution time will be selected and launched to execute, or
   ∘ the job resulting from a selection based on defined constraints, for example the earliest deadline, or the highest priority, will be selected and launched to execute (this allows the selection to be based on dynamic algorithms like Earliest Deadline First (EDF), or a fixed priority scheduler), or
   ∘ the job for which the probability of finishing its execution in less time than that accounted for in its execution interval and providing more slack, i.e., unused CPU execution time, is higher will be selected.

The runtime dispatching means according to this case 2 will iterate over the timetable while keeping track of the progress of time in relation to the cycle. The dispatcher will compare the current time with the instants of time defining the start and end of each flexibility interval, which will be sorted increasingly in the timetable. The selection in this sub-case is based on an estimate of the probability that a job will leave unused execution time. This time slack may be then used by other overrunning jobs within the subset of jobs sharing the flexibility interval bounds. The probability that a job finishes earlier can be dynamically measured during the execution over the past cycles, for example by calculating the moving average over the series of past execution cycles, or it can be based on static analysis and pre-defined before runtime.

In the context of case 2 it may be provided that the job selected and launched to execute will remain executing until any one of the following events occurs:
▪ the job finishes its execution for the current cycle, or
▪ the job reaches the amount of execution time corresponding to its execution interval, irrespective of the relative position of the current time within the flexibility interval during execution of the job, preferably plus any amount of slack available within the execution interval, calculated as:
   ∘ the sum of existing idle intervals within the flexibility interval, calculated as the difference between the length of the flexibility interval and the sum of the execution intervals of all jobs within said flexibility interval (this can be statically determined prior to runtime; this condition guarantees that no job will be left with less than an interval corresponding to the length of its execution interval), or
   ∘ the sum of slack provided by any job executing within the flexibility interval and not consumed by any other previous job (this can be dynamically determined based on the execution of jobs),
   or
▪ the job reaches the amount of execution time corresponding to its execution interval plus a defined overrun budget, specified as
   ∘ a fixed interval of time, e.g., 1 ms, or
   ∘ a relative percentage of its own execution time, e.g., 10%,
   or
▪ the current time reaches the end of the flexibility interval.

The selection procedure will repeat as above with the remaining jobs (i.e., excluding the already executed job). If necessary, the slack account and statistical parameters will be updated.

Once all jobs have finished their execution for this cycle, the dispatcher will yield until the end of the flexibility interval, and then repeat.

According to the most generic case, case 3, the flexibility intervals of different jobs may partially overlap with flexibility or execution intervals of other jobs. Note that execution intervals of different jobs cannot overlap. The runtime dispatcher according to this case will iterate over the timetable while keeping track of the progress of time in relation to the cycle. The dispatcher will compare the current time with the instants of time defining the start and end of each flexibility interval and execution interval, which will be sorted increasingly in the timetable.

In this context it may be provided that for jobs of the at least one third subset of jobs the runtime dispatching means act according to the following rules:
▪ when the current time reaches the start of a flexibility interval, the jobs related to said flexibility interval will be added to a list of eligible jobs, and wherein
▪ when one of the following conditions is met:
   ∘ the core on which the job is to be executed becomes idle,
   ∘ a currently executing job finishes its execution, or is stopped, or is forced to stop,
   ∘ the current time reaches the start of the execution interval of one of the jobs in the list of eligible jobs,
the runtime dispatching means will select the job from the list of eligible jobs for which the start of its execution interval occurs earlier.

Once a job selected from the list of eligible jobs, said job is removed from said list and launched for execution. When the list of eligible jobs is empty, the runtime dispatching means will yield.

It may further be provided that the execution of a job is stopped or the job is forced to stop execution
- when the current time equals the completion point of the execution interval of said job and there is a job in the list of eligible jobs for which the start of its execution interval equals the current time, or
- the current time is later than the completion point of the execution interval of said job and there is a job in the list of eligible jobs for which the start of its execution interval equals the current time, or
- when the current time reaches the end of the flexibility interval of said executing job, if no job is in the list of eligible jobs for which the start of its execution interval equals the current time.

In this context is should be noted that it may be provided that a job finishes its execution by itself before the above conditions are met.

According to the invention, at least one of the cases 1-3 and the corresponding policy of the dispatching means is present. However, it may also be possible, that other cases, also case 0, or all cases 0, 1 - 3 are present in a schedule. The dispatching means are configured to deal with all those cases which are present, implementing at least one of the runtime dispatching policies described in cases 1, 2, and 3, in combination, or not, with the policy described in case 0.

Furthermore, the invention refers to runtime dispatching means for selecting jobs of tasks and launching said jobs to execution in a computer system, in particular for the use in a method as described above, according to a global time-triggered schedule,
- wherein the computer system comprises one or more cores on one or more central processing units of the computer system,
- wherein said global time-triggered schedule comprises one time-triggered schedule, "core schedule", for each of said cores, wherein the jobs of tasks of the set of tasks to be executed on a specific core are executed on said core according to the core schedule of said core,
- wherein the global time-triggered schedule specifies a cycle with a cycle length for the set of tasks,

wherein the **core schedule** of a core specifies for the jobs of each task of the set of tasks, which is to be executed on said core:
   - an execution interval for each task instance, "job", of the task, during which execution interval the job can be executed, wherein each execution interval comprises a release point, at which the execution interval starts, and a completion point, at which the execution interval ends, wherein the duration of an execution interval is the duration of the time span between the release point and the completion point of the execution interval, wherein the execution interval of a job defines a time interval during which the job has a guarantee to be executed on the core, and
   - a period according to which period the jobs of said task are executed on the core,
      ∘ wherein the execution interval of each job of the task is iterated cyclically according to the cycle, and
wherein the execution intervals of any two jobs of the same and of different tasks do not overlap, and
wherein the cycle is a common multiple of all periods of all tasks in the set of tasks.

The runtime dispatching means is characterized in that it is configured to select and launch jobs of tasks for execution according to the **core schedule,** taking into account all flexibility intervals of the core schedule.

The invention relates to runtime dispatching means, e.g., a runtime dispatcher module, for example the operating system dispatcher, responsible for the selection of one job among the jobs to be executed on the core, and launch said job to execution. Said selection is performed among the subset of eligible jobs, normally referred as the set of ready jobs, of the set of jobs, and relates to the respective intervals of each job depending on the above-mentioned cases.

In some cases, a runtime dispatcher may implement multiple dispatching policies, or in other cases multiple dispatchers may coexist simultaneously in a computer system. For example, a system may consist of two dispatchers, one implementing a fixed priority policy and one implementing a time-triggered policy, wherein each said dispatcher relates to a separate set of jobs.

Some computer systems, for example, computer systems based on GNU/Linux, implement several runtime dispatchers organized hierarchically. When the top dispatcher has no job to select for execution among the list of eligible jobs of its set of tasks, it yields and delegates to the next dispatchers in the hierarchy to perform a selection. If no dispatcher has eligible jobs to select, the respective core (CPU) idles until a job becomes eligible.

In connection with case 1 it may be provided that the runtime dispatching means is configured to act for first subsets of jobs, for which the core schedule specifies flexibility intervals which do not overlap with each other, wherein at least one of the flexibility intervals of a job is longer than the execution of said job according to the following rules:
▪ if the current time is within the flexibility interval of a job, said job
   ∘ will be launched to execute, if the core for said job is idle, i.e., no job is executing, and
   ∘ if the core for said job is not idle, i.e., another job is executing, said selected job will be launched to execute at the instant of time that occurs first among the following:
      ▪ instant of time at which the core for said job becomes idle, or
      ▪ the current time reaches the start of the execution interval of the selected job.

In connection with case 2 it may be provided that the runtime dispatching means is configured to act for second subsets of jobs, for which the core schedule specifies flexibility intervals so that the flexibility intervals of two or more jobs of said second subset of jobs are identical, i.e., for said two or more jobs of said second subset the start instant of their flexibility intervals is the same instant *and* the end instant of their flexibility intervals is the same instant according to the following rules:
▪ if the current time is within one or multiple flexibility intervals, a selection of one of the jobs for which said flexibility interval is equivalent will be performed based on one of the following defined criteria:
   ∘ the job with the earliest execution interval will be selected and launched to execute, or
   ∘ the job with the shortest execution time will be selected and launched to execute, or
   ∘ the job resulting from a selection based on defined constraints, for example the earliest deadline, or the highest priority, will be selected and launched to execute, or
   ∘ the job for which the probability of finishing its execution in less time than that accounted for in its execution interval and providing more slack, i.e., unused CPU execution time, is higher will be selected.

In connection with case 2 it may further be provided that the runtime dispatching means is configured such that the job selected and launched to execute will remain executing until any one of the following events occurs:
▪ the job finishes its execution for the current cycle, or
▪ the job reaches the amount of execution time corresponding to its execution interval, irrespective of the relative position of the current time within the flexibility interval during execution of the job, preferably plus any amount of slack available within the execution interval, calculated as:
   ∘ the sum of existing idle intervals within the flexibility interval, calculated as the difference between the length of the flexibility interval and the sum of the execution intervals of all jobs within said flexibility interval, or
   ∘ the sum of slack provided by any job executing within the flexibility interval and not consumed by any other previous job,
   or
▪ the job reaches the amount of execution time corresponding to its execution interval plus a defined overrun budget, specified as
   ∘ a fixed interval of time, e.g., 1 ms, or
   ∘ a relative percentage of its own execution time, e.g., 10%,
   or
▪ the current time reaches the end of the flexibility interval.

In connection with case 3 it may be provided that the runtime dispatching means is configured to act for third subsets of jobs, for which the core schedule specifies that the flexibility intervals of any two jobs of said third subset partially overlap according to the following rules:
▪ when the current time reaches the start of a flexibility interval, the jobs related to said flexibility interval will be added to a list of eligible jobs, and wherein
▪ when one of the following conditions is met:
   ∘ the core on which the job is to be executed becomes idle,
   ∘ a currently executing job finishes its execution, or is stopped, or is forced to stop,
   ∘ the current time reaches the start of the execution interval of one of the jobs in the list of eligible jobs,
the runtime dispatching means will select the job from the list of eligible jobs for which the start of its execution interval occurs earlier.

In connection with case 3 it may further be provided that the execution of a job is stopped or the job is forced to stop execution:
- when the current time equals the completion point of the execution interval of said job and there is a job in the list of eligible jobs for which the start of its execution interval equals the current time, or
- the current time is later than the completion point of the execution interval of said job and there is a job in the list of eligible jobs for which the start of its execution interval equals the current time, or
- when the current time reaches the end of the flexibility interval of said executing job, if no job is in the list of eligible jobs for which the start of its execution interval equals the current time.

The invention also refers to a computer system comprising one or more cores on one or more central processing units, wherein the computer system is configured to execute tasks according to a method as described above, the computer system comprising runtime dispatching means as described above.

Furthermore, the invention relates to a method to generate a core schedule for the execution of jobs of tasks on a core of a computer system, in particular for the use in a method as described above, wherein the core schedule comprises flexibility intervals for the jobs to be executed on said core, the method comprising the steps of:
- providing a time-triggered schedule for the tasks to be executed on said core, which time-triggered schedule comprises an execution interval for each job of each task and a period for each task, according to which period the jobs of said task are cyclically executed,
- determine schedulability bounds based on said time-triggered schedule and based on a set of scheduling constraints, resulting in upper and lower bounds for each execution interval,
- for example by iteratively increasing, starting with the execution interval of a first job of a task from said time-triggered schedule for said core, the execution interval while checking that the scheduling constraints are fulfilled, and
- once in an iteration at least one scheduling constraint is not fulfilled, determine the extended execution interval of the previous iteration as the flexibility interval for said first job,
- selected as first job until all jobs have been provided a flexibility interval,
- selecting a next job and repeating the method until all jobs have been provided with a flexibility interval.

The invention is described in a non-limiting manner with reference to the figures:
Fig. 1 depicts a time triggered schedule for a set TS₁ of jobs with no flexibility intervals.
Fig. 2 depicts a time-triggered schedule with flexibility intervals for a set TS₂ of jobs with non-overlapping flexibility intervals.
Fig. 3 depicts a time-triggered schedule with flexibility intervals for a set TS₃ of jobs with completely overlapping flexibility intervals.
Fig. 4 depicts a time-triggered schedule with flexibility intervals for a set of jobs with partially overlapping flexibility intervals.
Fig. 5-8 depict exemplary execution instances, according to embodiments of the invention, of the time-triggered schedules depicted in figures 1- 4.

A computer system, for example an automotive computer system, comprises one or more hosts, in particular processors, wherein each host, hᵢ, in the set of said hosts, H = {h₁..hₙ}, comprises one or more CPU cores, characterized by the set of CPU cores, C^{H} = {c^{h}_{1..} c^{h}ₖ}, wherein said CPU cores are configured to execute instructions. Software applications, for example automotive functions, comprise software components (tasks), which comprise a sequence of instructions that can be executed in said one or multiple CPU cores.

Software tasks are cyclically executed in said CPU cores, wherein each software task, swᵢ, in the set of defined software tasks, SW = {sw₁..swₘ}, is characterized by
- the length of its execution cycle, namely its period, or minimum interarrival time, pᵢ, and
- its maximum required execution budget, wᵢ corresponding to the accrued time required in one CPU core to execute said task within one cycle, for example its worst-case computation time (WCET), or and estimation of the required computation time.

A software task, swᵢ, may further be characterized by
- its earliest release time, eᵢ, indicating the earliest relative time when the software task is ready for execution, relative to the beginning of a cycle, and/or
- its execution deadline, dᵢ, indicating the latest relative point in time after the beginning of a cycle by which the software task shall complete the execution corresponding to said cycle.

The software tasks in the CPU are executed following a time-triggered scheduling paradigm, whereby a run-time component of said computer system (the dispatcher), for example the runtime dispatcher component of the operating system, selects and dispatches instances of said tasks (jobs) to be executed for defined time intervals, or intervals, in said CPU cores following a predefined time-triggered schedule (the tt-schedule).

Each said interval is characterized by a start time, or time offset, o, and a duration, or length, b.

A tt-schedule for a CPU core, c, the "core schedule", relates to a timetable, TTc, characterized by the length of the table cycle, z^{c,}, or schedule cycle, and a sequence of one or more elements, wherein each said element of said timetable is characterized by a reference to an assigned job of a software task, sw, from the set of software tasks, SW.

The periodic execution of tasks within the schedule cycle comprises one or more executions of task instances, or jobs, of said task represented by one said element in the timetable, wherein each job corresponds to an execution of the task according to its periodicity within the schedule cycle. If the task period is equal to the schedule cycle, there is one single job of said task within the schedule cycle, whereas if the schedule cycle is larger than the period, there are multiple jobs of said task according to the relation between the period and the schedule cycle. Note that the length of the schedule cycle, shall be a common multiple of the period of all tasks, for example, the least common multiple.

In the examples shown below, it is assumed for the sake of simplicity that each specific task is only executed once within a cycle with cycle length T (exactly spoken only one job of said task is executed within a cycle), so that in the following description for the sake of simplicity the wording "execution of a task" instead of the wording "execution of a job of said" is used.

According to the invention, each element of said timetable is further characterized by an additional flexibility interval, fi.

**Table** 1 shows an exemplary set of tasks (also denoted as "task set") TS₀, comprising three tasks (one job per task), sw₁, sw₂, and sws, characterized by their period p, early release time e (earliest start point), deadline d (latest completion point), and execution budget w.

**Table 1**

| | **sw₁** | **sw₂** | **sw₃** |
|---|---|---|---|
| **p** | T | T | T |
| **e** | t₀ | t₂ | t₅ |
| **d** | t₂ | t₅ | t₇ |
| **w** | w₁ | w₂ | w₃ |

Reference sign "T" denotes the cycle length specified by the global time-triggered schedule.

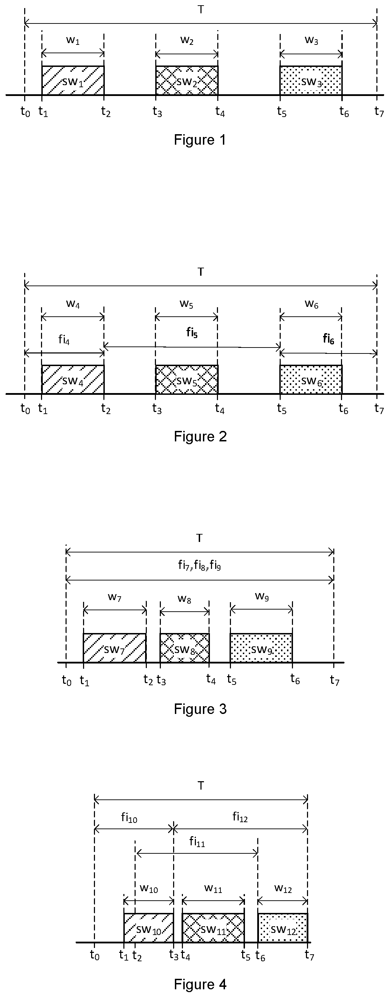

**Figure 1** depicts an example of a time triggered schedule according to the state of the art, computed by an offline time-triggered scheduler for said task set TS₀. As can be seen from **Figure 1****,** a fixed execution interval is assigned to each task and no flexibility intervals are provided, as is the case in the prior art.

**Table 2** characterizes the tt-schedule from **Figure 1** in the form of a timetable, wherein the schedule cycle z is equal to the period p, (i.e., z = T) and the execution intervals are s₁, s₂, and s₃ (o ... start time, b ... duration/length),

**Table 2**

| | **o** | **b** | **sw** |
|---|---|---|---|
| **s₁** | t₁ | t₂ - t₁ | sw₁ |
| **s₂** | t₃ | t₄ - t₃ | sw₂ |
| **s₃** | t₅ | t₆ - t₅ | sw₃ |

**Table 3** shows an exemplary task set ("first" set of tasks), TS₁, comprising three tasks, sw₄, sw₅, and sw₆, characterized by their period p, early release time e, deadline d, and execution budget w.

**Table 3**

| | **sw₄** | **sw₅** | **sw₆** |
|---|---|---|---|
| **p** | T | T | T |
| **e** | t₀ | t₂ | t₅ |
| **d** | t₂ | t₅ | t₇ |
| **w** | w₄ | w₅ | w₆ |

**Figure 2** depicts a time-triggered schedule for the task set TS₁ from table 3, with execution intervals s₄, s₅, s₆ and with non-overlapping flexibility intervals fi₄, fi₅, and fi₆, for the tasks of task set TS₁.

**Table 4** characterizes the tt-schedule from **Figure 2** in the form of a timetable, wherein the schedule cycle is equal to the period T, (i.e., z = T) and the execution intervals are s₄, s₅, and s₆. The parameters o and b refer to the execution interval of the respective task, fi denotes the flexibility interval of the respective task.

**Table 4**

| | **o** | **b** | **sw** | **fi** |
|---|---|---|---|---|
| **s₄** | t₁ | t₂ - t₁ | sw₄ | fi₄ = (t₀ , t₂) |
| **s₅** | t₃ | t₄ - t₃ | sw₅ | fi₅ = (t₂ , t₅) |
| **s₆** | t₅ | t₆ - t₅ | sw₆ | fi₆ = (t₅, t₇) |

**Table 5** shows an exemplary task set ("second" set of tasks), TS2, comprising three tasks, sw₇, sw₈, and sw₉, characterized by their period p, early release time e, deadline d, and execution budget w.

**Table 5**

| | **sw₇** | **sw₈** | **sw₉** |
|---|---|---|---|
| **p** | T | T | T |
| **e** | t₀ | t₀ | t₀ |
| **d** | t₇ | t₇ | t₇ |
| **w** | w₇ | w₈ | w₉ |

**Figure 3** depicts a time-triggered schedule with flexibility intervals for a task set with identical, completely overlapping flexibility intervals, fi₇, fi₈, and fi₉, for the task set TS₂.

**Table 6** characterizes the tt-schedule from **Figure 3** in the form of a timetable, wherein the schedule cycle is equal to the period T, (i.e., z = T) and the execution intervals (parameters o, b) are s₇, Ss, and s₉.

**Table 6**

| | **o** | **b** | **sw** | **Fi** |
|---|---|---|---|---|
| **s₇** | t₁ | t₂ - t₁ | sw₇ | fi₇ = (t₀ , t₇) |
| **s₈** | t₃ | t₄ - t₃ | sw₈ | fi₈ = (t₀ , t₇) |
| **s₉** | t₅ | t₆ - t₅ | sw₉ | fi₉ = (t₀ , t₇) |

An additional exemplary set of tasks ("third" set of tasks), TS₃, comprising three tasks, sw₁₀, sw₁₁, and sw₁₂, is characterized in **Table 7,** by the period, p, early release time, e, deadline, d, and execution budget, w, of each task sw₁₀, swn, sw₁₂ of the task set TS₃.

**Table 7**

| | **sw₁₀** | **sw₁₁** | **sw₁₂** |
|---|---|---|---|
| **p** | T | T | T |
| **e** | t₀ | t₀ | t₀ |
| **d** | t₇ | t₇ | t₇ |
| **w** | w₁₀ | w₁₁ | w₁₂ |

**Figure 4** depicts a time-triggered schedule with flexibility intervals for a task set with partially overlapping flexibility intervals, fi₁₀, fi₁₁, and fi₁₂, for the task set TS₃ from **Table 7.**

**Table 8** characterizes the tt-schedule from **Figure 4** in the form of a timetable, wherein the schedule cycle is equal to the period T, (i.e., z = T) and the execution intervals (parameters o, b) are s₁₀, s₁₁, s₁₂.

**Table 8**

| | **o** | **b** | **sw** | **fi** |
|---|---|---|---|---|
| **s₁₀** | t₁ | t₃ - t₁ | sw₁₀ | fi₁₀ = (t₀ , t₃) |
| **s₁₁** | t₄ | t₅ - t₄ | sw₁₁ | fi₁₁ = (t₂, t₆) |
| **s₁₂** | t₆ | t₇ - t₆ | sw₁₂ | fi₁₂ = (t₃ , t₇) |

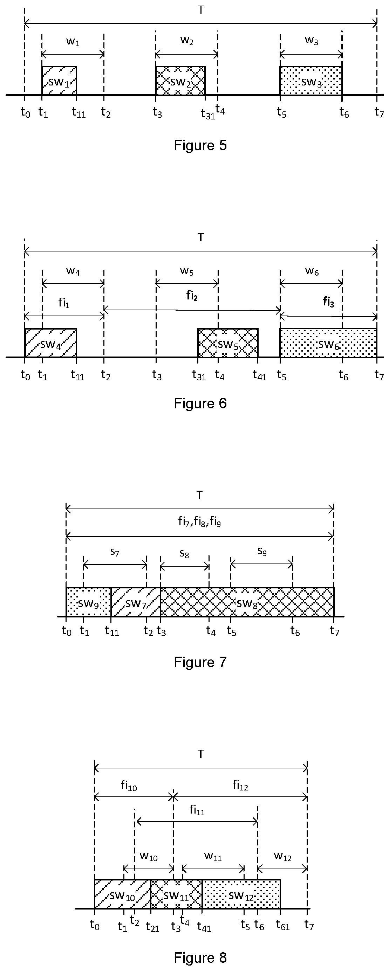

**Figures 5-8** depict exemplary execution instances ("jobs") of the time-triggered schedules depicted in **Figures 1-4** and characterized in the tables described above.

**Case 0: (state of the art)**

The exemplary task set, TS₀, comprises three tasks, sw₁, sw₂, and sws, as described above.

A time-triggered scheduler according computes a time-trigger schedule for TS₀ as shown in **Table 2,** with no flexibility interval.

**Figure 5** depicts a possible execution trace of said task set, TS₀, for the purpose of this example, wherein the task execution time for each task in the task set is less than or equal to the corresponding execution interval of the task.

The starting execution time for each task is strictly bound to the start of the execution interval determined by the time-triggered schedule, regardless of the early termination of any preceding task in the corresponding time-triggered schedule. For example, the execution of sw₂ in **Figure 5** starts at time t₃ independent of the fact the task sw₁ has already finished execution at an earlier point in time, tn, with respect to the end of the execution interval, t₂, of task sw₁ as defined in the time-triggered schedule **Table 2.**

Also, according to a general time-triggered dispatcher without the additional advantages of the present invention, the end of the execution time of task sw₃ in **Figure 5** is upper bounded to the end of the execution interval, t₆, regardless of whether the task is already finished with its execution at this point to or not.

### Case 1:

A first set of tasks, TS₁, comprising three tasks, sw₄, sws, and sw₆, is described above in detail and characterized in **Table 3.** A time-triggered scheduler including advantages of the invention may compute a time-trigger schedule as characterized in **Table 4** and depicted in **Figure 2****,** with flexibility intervals for the tasks that do not overlap.

**Figure 6** depicts a possible execution trace of said first task set, TS₁, for the purpose of this example, wherein the task available execution time for some tasks in the task set is larger than the corresponding task execution interval.

A time-triggered dispatcher (dispatching means) according to the invention may select and launch tasks for execution as depicted in **Figure 6****.** For example, in the exemplary trace the execution of sw₄ in **Figure 6** may start (due to its flexibility interval) at time t₀, ahead of the start of the start of its execution interval, t₁, if the CPU core is idle at that time.

Task sws starts in this example during its flexibility interval at t31, later than the starting instance t₃ of its execution interval s₅ (= t₄ - t₃) and ends later than the end t₄ of its execution interval (but before the end of its flexibility interval). Accordingly, the start of the execution time of task sws according to **Figure 6****,** t₃₁, is not bounded to the start of neither its flexibility interval, t₂, nor its execution interval, t₄, for example allowing the CPU core to execute other tasks, not depicted in the figure, or remain in a low power mode to save energy.

The end of the execution time of task sw₆ in **Figure 6** is upper bounded to the end of the flexibility interval, t₇, regardless of the end of the defined end of the execution interval, t₆, for example allowing said task sw₆ to execute longer than its assigned execution interval if required.

### Case 2:

Yet another exemplary task set, second task set TS₂, comprising three tasks, sw₇, sw₈, and sw₉, is characterized in **Table 5,** as described in detail above. A time-triggered scheduler including advantages of this invention may compute a time-trigger schedule as characterized in **Table 6** with flexibility intervals for the tasks, as depicted in **Figure 3****.** In this example the flexibility intervals are equal.

**Figure 7** depicts a possible execution trace of said task set, for the purpose of this example, wherein the task execution time for some tasks in the task set is larger than the corresponding task execution interval.

According to a time-triggered dispatcher according to the invention, the starting execution time for each task are bounded by the corresponding flexibility interval determined by the time-triggered schedule, wherein said flexibility interval is equal for all tasks in the task set. For example, in the exemplary trace the execution of sw₉ in **Figure 7** starts at time t₀, ahead of the start of its execution interval, t₅, and prior to tasks with an earlier execution interval, sw₇ and sw₈, for example due to the task sw₉ having a shorter execution time than its budgeted execution interval s₉, which for example is identified by historical observation of preceding cycles, or due to the dispatching of task based on statically defined, or dynamically assigned, priorities, whereby sw₉ is assigned a higher priority than sws and sw₇.

Furthermore, the execution time (t₇ - t₃) of task sw₈ in the example according to **Figure 7** is larger than the execution budget corresponding to its execution interval, t₄ - t₃, allowing a larger execution time for sw₈ which for example includes the accrued slack corresponding to unused time from preceding tasks plus the additional time within the flexibility interval, for example allowing sws to implement a progressive algorithm maximizing its execution time until the end of the flexibility interval, whereby the functional performance of said algorithm is improved proportionally to its runtime.

### Case 3:

A further exemplary task, TS₃, the third task set, comprising three tasks, sw₁₀, sw₁₁, and sw₁₂, is characterized in **Table 7** as described above in detail. A time-triggered scheduler may compute a time-triggered schedule as described in **Table 8** by the beginning of the execution interval, o, the length of the execution interval, b, the related task, sw, and the flexibility interval, fi, of each execution interval, and depicted in **Figure 4****.** Said time-trigger schedule for the third task set is provided with flexibility intervals computed according to embodiments of this invention and wherein said flexibility intervals partially overlap.

**Figure 8** depicts a possible execution trace of said third task set, for the purpose of this example, wherein the task execution time for some tasks in the task set is larger than the corresponding task execution interval.

According to a time-triggered dispatcher according to the invention, the starting execution time for each task are bounded by the corresponding flexibility interval determined by the time-triggered schedule, which flexibility intervals are partially overlapping. For example, in the exemplary trace the execution of swio in **Figure 8****,** may start at time t₀, ahead of the start of its execution interval, t₂. Similarly, task sw₁₁, may start at time t₂₁, right after swio finishes execution and ahead of the start of its execution interval, t₄.

Furthermore, the execution time (t₆₁ - t₄₁) of task sw₁₂ in **Figure 8** is larger than the execution budget corresponding to its execution interval, t₇ - t₆, allowing a larger execution time for sw₁₂.

### References

[1] S.S. Craciunas, R. Serna Oliver - Combined Task- and Network-level Scheduling for Distributed Time-triggered Networked Systems. Real-Time Systems, Volume 52, Issue 2, pp. 161-200, Springer, 2016.
[2] Anna Minaeva and Zdeněk Hanzalek. 2021. Survey on Periodic Scheduling for Time-triggered Hard Real-time Systems. ACM Comput. Surv. 54, 1, Article 23 (January 2022), 32 pages. https://doi.org/10.1145/3431232
[3] Richard Hladik, Anna Minaeva, and Zdeněk Hanzalek. 2020. On the Complexity of a Periodic Scheduling Problem with Precedence Relations. In Combinatorial Optimization and Applications: 14th International Conference, COCOA 2020, Dallas, TX, USA, December 11-13, 2020, Proceedings. Springer-Verlag, Berlin, Heidelberg, 107-124. https://doi.org/10.1007/978-3-030-64843-5_8
[4] McLean SD, Juul Hansen EA, Pop P and Craciunas SS (2022) Configuring ADAS Platforms for Automotive Applications Using Metaheuristics. Front. Robot. AI 8:762227. doi: 10.3389/frobt.2021.762227
[5] A. F. Mills and J. H. Anderson, "A Multiprocessor Server-Based Scheduler for Soft Real-Time Tasks with Stochastic Execution Demand," 2011 IEEE 17th International Conference on Embedded and Real-Time Computing Systems and Applications, Toyama, Japan, 2011, pp. 207-217, doi: 10.1109/RTCSA.2011.30.
[6] Ramon Serna Oliver, Paraskevas Karachatzis, and Silviu Craciunas. "Method to execute a mode-transition in a multi-mode computer system." U.S. Patent Application No. 17/930,811.
[7] Baruah, S.K., Rosier, L.E. & Howell, R.R. Algorithms and complexity concerning the preemptive scheduling of periodic, real-time tasks on one processor. Real-Time Syst 2, 301-324 (1990). https:/ /doi.org/10.1007/BF01995675
[8] R. Pellizzoni and G. Lipari, "Feasibility analysis of real-time periodic tasks with offsets," Real-Time Syst., vol. 30, no. 1-2, pp. 105-128, 2005
[9] Kong, W.; Nabi, M.; Goossens, K. Run-Time Recovery and Failure Analysis of Time-Triggered Traffic in Time Sensitive Networks. IEEE Access 2021, 9, 91710-91722.
[10] Li, J.; Xiong, H.; Li, Q.; Xiong, F.; Feng, J. Run-Time Reconfiguration Strategy and Implementation of Time-Triggered Networks. Electronics 2022, 11, 1477. https://doi.org/10.3390/ electronics11091477

## Claims

1. A method to execute jobs of a set of tasks in a computer system according to a global time-triggered schedule,
- wherein the computer system comprises one or more cores on one or more central processing units of the computer system,
- wherein said global time-triggered schedule comprises one time-triggered schedule, "core schedule", for each of said cores, wherein the tasks of the set of tasks to be executed on a specific core are executed on said core according to the core schedule of said core,
- wherein the global time-triggered schedule specifies a cycle with a cycle length for the set of tasks,
wherein the core schedule of a core specifies for each task of the set of tasks, which is to be executed on said core:
• an execution interval for each task instance, "job", of the task, during which execution interval the job can be executed, wherein each execution interval comprises a release point, at which the execution interval starts, and a completion point, at which the execution interval ends, wherein the duration of an execution interval is the duration of the time span between the release point and the completion point of the execution interval, wherein the execution interval of a job defines a time interval during which the job has a guarantee to be executed on the core, and
• a period according to which period the jobs of said task are executed on the core,
∘ wherein the execution interval of each job of the task is iterated cyclically according to the cycle, and
wherein the execution intervals of any two jobs of the same and of different tasks do not overlap, and
wherein the cycle is a common multiple of all periods of all tasks in the set of tasks,
**characterized in that**
the core schedule specifies for each job a flexibility interval, wherein the duration of the flexibility interval of a job is equal or longer than the execution interval of said job, wherein at least the flexibility interval of one job is longer than the execution interval of said job, wherein
the flexibility interval of a job starts no later than the release point of the execution interval of said job, and wherein
the flexibility interval of a job ends no sooner than the completion point of the execution interval of said job, wherein
the flexibility of a job defines a time interval during which said job can be executed, and wherein
runtime dispatching means are provided, which select and launch jobs for execution according to the global time-triggered schedule, taking into account for each core all flexibility intervals as specified in the core schedule.

2. Method according to claim 1, **wherein** among the jobs of those tasks of the set of tasks that are to be executed on the core at least one first subset of jobs is provided, wherein for the jobs of said at least one first subset the core schedule specifies flexibility intervals which do not overlap with each other, wherein at least one of the flexibility intervals of a job is longer than the execution of said job.

3. Method according to claim 1 or 2, **wherein** among those tasks of the set of tasks that are to be executed on the core at least one second subset of jobs is provided, wherein for the jobs of said at least one second subset the core schedule specifies flexibility intervals so that the flexibility intervals of two or more jobs of said at least one second subset of jobs are identical, i.e., for said two or more jobs of said at least one second subset the start instant of their flexibility intervals is the same instant *and* the end instant of their flexibility intervals is the same instant.

4. Method according to one of the claims 1 to 3, **wherein** among those tasks of the set of tasks that are to be executed on the core at least one third subset of jobs is provided, wherein the flexibility intervals of any two jobs of said at least one third subset partially overlap.

5. Method according to one of the claims 2 to 4, **wherein** for jobs of the at least one first subset of task jobs the runtime dispatching means act according to the following rules:
▪ if the current time is within the flexibility interval of a job, said job
∘ will be launched to execute, if the core for said job is idle, i.e., no job is executing, and
∘ if the core for said job is not idle, i.e., another job is executing, said selected job will be launched to execute at the instant of time that occurs first among the following:
▪ instant of time at which the core for said job becomes idle, or
▪ the current time reaches the start of the execution interval of the selected job.

6. Method according to one of the claims 3 to 5, **wherein** for jobs of the at least one second subset of task jobs the runtime dispatching means act according to the following rules:
▪ if the current time is within one or multiple flexibility intervals, a selection of one of the jobs for which said flexibility interval is equivalent will be performed based on one of the following defined criteria:
∘ the job with the earliest execution interval will be selected and launched to execute, or
∘ the job with the shortest execution time will be selected and launched to execute, or
∘ the job resulting from a selection based on defined constraints, for example the earliest deadline, or the highest priority, will be selected and launched to execute, or
∘ the job for which the probability of finishing its execution in less time than that accounted for in its execution interval and providing more slack, i.e., unused CPU execution time, is higher will be selected.

7. Method according to claim 6, **wherein** the job selected and launched to execute will remain executing until any one of the following events occurs:
▪ the job finishes its execution for the current cycle, or
▪ the job reaches the amount of execution time corresponding to its execution interval, irrespective of the relative position of the current time within the flexibility interval during execution of the job, preferably plus any amount of slack available within the execution interval, calculated as:
∘ the sum of existing idle intervals within the flexibility interval, calculated as the difference between the length of the flexibility interval and the sum of the execution intervals of all jobs within said flexibility interval, or
∘ the sum of slack provided by any job executing within the flexibility interval and not consumed by any other previous job,
or
▪ the job reaches the amount of execution time corresponding to its execution interval plus a defined overrun budget, specified as
∘ a fixed interval of time, e.g., 1 ms, or
∘ a relative percentage of its own execution time, e.g., 10%, or
▪ the current time reaches the end of the flexibility interval.

8. Method according to one of the claims 4 to 7, **wherein** for jobs of the at least one third subset of jobs the runtime dispatching means act according to the following rules:
▪ when the current time reaches the start of a flexibility interval, the jobs related to said flexibility interval will be added to a list of eligible jobs, and wherein
▪ when one of the following conditions is met:
∘ the core on which the job is to be executed becomes idle,
∘ a currently executing job finishes its execution, or is stopped, or is forced to stop,
∘ the current time reaches the start of the execution interval of one of the jobs in the list of eligible jobs,
the runtime dispatching means will select the job from the list of eligible jobs for which the start of its execution interval occurs earlier.

9. Method according to claim 8, **wherein** the execution of a job is stopped or the job is forced to stop execution
• when the current time equals the completion point (completion instant) of the execution interval of said job and there is a job in the list of eligible jobs for which the start of its execution interval equals the current time, or
• the current time is later than the completion point of the execution interval of said job and there is a job in the list of eligible jobs for which the start point (start instant) of its execution interval equals the current time, or
• when the current time reaches the end of the flexibility interval of said executing job, if no job is in the list of eligible jobs for which the start of its execution interval equals the current time.

10. Runtime dispatching means for selecting jobs of tasks and launching said jobs to execution in a computer system, in particular for the use in a method according to one of the claims 1 to 9, according to a global time-triggered schedule,
- wherein the computer system comprises one or more cores on one or more central processing units of the computer system,
- wherein said global time-triggered schedule comprises one time-triggered schedule, "core schedule", for each of said cores, wherein the jobs of tasks of the set of tasks to be executed on a specific core are executed on said core according to the core schedule of said core,
- wherein the global time-triggered schedule specifies a cycle with a cycle length for the set of tasks,
wherein the **core schedule** of a core specifies for the jobs of each task of the set of tasks, which is to be executed on said core:
• an execution interval for each task instance, "job", of the task, during which execution interval the job can be executed, wherein each execution interval comprises a release point, at which the execution interval starts, and a completion point, at which the execution interval ends, wherein the duration of an execution interval is the duration of the time span between the release point and the completion point of the execution interval, wherein the execution interval of a job defines a time interval during which the job has a guarantee to be executed on the core, and
• a period according to which period the jobs of said task are executed on the core,
∘ wherein the execution interval of each job of the task is iterated cyclically according to the cycle, and
wherein the execution intervals of any two jobs of the same and of different tasks do not overlap, and
wherein the cycle is a common multiple of all periods of all tasks in the set of tasks,
**characterized in that**
it is configured to select and launch jobs of tasks for execution according to the core schedule, taking into account all flexibility intervals of the core schedule.

11. Runtime dispatching means according to claim 10, **wherein** the runtime dispatching means is configured to act for first subsets of jobs, for which the core schedule specifies flexibility intervals which do not overlap with each other, wherein at least one of the flexibility intervals of a job is longer than the execution of said job according to the following rules:
▪ if the current time is within the flexibility interval of a job, said job
∘ will be launched to execute, if the core for said job is idle, i.e., no job is executing, and
∘ if the core for said job is not idle, i.e., another job is executing, said selected job will be launched to execute at the instant of time that occurs first among the following:
▪ instant of time at which the core for said job becomes idle, or
▪ the current time reaches the start of the execution interval of the selected job.

12. Runtime dispatching means according to claim 10 or 11, **wherein** the runtime dispatching means is configured to act for second subsets of jobs, for which the core schedule specifies flexibility intervals so that the flexibility intervals of two or more jobs of said second subset of jobs are identical, i.e., for said two or more jobs of said second subset the start instant of their flexibility intervals is the same instant *and* the end instant of their flexibility intervals is the same instant according to the following rules:
▪ if the current time is within one or multiple flexibility intervals, a selection of one of the jobs for which said flexibility interval is equivalent will be performed based on one of the following defined criteria:
∘ the job with the earliest execution interval will be selected and launched to execute, or
∘ the job with the shortest execution time will be selected and launched to execute, or
∘ the job resulting from a selection based on defined constraints, for example the earliest deadline, or the highest priority, will be selected and launched to execute, or
∘ the job for which the probability of finishing its execution in less time than that accounted for in its execution interval and providing more slack, i.e., unused CPU execution time, is higher will be selected.

13. Runtime dispatching means according to claim 12, **wherein** the runtime dispatching means is configured such that the job selected and launched to execute will remain executing until any one of the following events occurs:
▪ the job finishes its execution for the current cycle, or
▪ the job reaches the amount of execution time corresponding to its execution interval, irrespective of the relative position of the current time within the flexibility interval during execution of the job, preferably plus any amount of slack available within the execution interval, calculated as:
∘ the sum of existing idle intervals within the flexibility interval, calculated as the difference between the length of the flexibility interval and the sum of the execution intervals of all jobs within said flexibility interval, or
∘ the sum of slack provided by any job executing within the flexibility interval and not consumed by any other previous job,
or
▪ the job reaches the amount of execution time corresponding to its execution interval plus a defined overrun budget, specified as
∘ a fixed interval of time, e.g., 1 ms, or
∘ a relative percentage of its own execution time, e.g., 10%,
or
▪ the current time reaches the end of the flexibility interval.

14. Runtime dispatching means according to one of the claims 10 to 13, **wherein** the runtime dispatching means is configured to act for third subsets of jobs, for which the core schedule specifies that the flexibility intervals of any two jobs of said third subset partially overlap according to the following rules:
▪ when the current time reaches the start of a flexibility interval, the jobs related to said flexibility interval will be added to a list of eligible jobs, and wherein
▪ when one of the following conditions is met:
∘ the core on which the job is to be executed becomes idle,
∘ a currently executing job finishes its execution, or is stopped, or is forced to stop,
∘ the current time reaches the start of the execution interval of one of the jobs in the list of eligible jobs,
the runtime dispatching means will select the job from the list of eligible jobs for which the start of its execution interval occurs earlier.

15. Runtime dispatching means according to claim 14, **wherein** the execution of a job is stopped or the job is forced to stop execution:
• when the current time equals the completion point of the execution interval of said job and there is a job in the list of eligible jobs for which the start of its execution interval equals the current time, or
• the current time is later than the completion point of the execution interval of said job and there is a job in the list of eligible jobs for which the start of its execution interval equals the current time, or
• when the current time reaches the end of the flexibility interval of said executing job, if no job is in the list of eligible jobs for which the start of its execution interval equals the current time.

16. A computer system comprising one or more cores on one or more central processing units, wherein the computer system is configured to execute tasks according to a method according to one of the claims 1 to 9, the computer system comprising runtime dispatching means according to one of the claims 10 to 15.

17. Method to generate a core schedule for the execution of jobs of tasks on a core of a computer system, in particular for the use in a method according to one of the claims 1 to 9, wherein the core schedule comprises flexibility intervals for the jobs to be executed on said core, the method comprising the steps of:
• providing a time-triggered schedule for the tasks to be executed on said core, which time-triggered schedule comprises an execution interval for each job of each task and a period for each task, according to which period the jobs of said task are cyclically executed,
• determine schedulability bounds based on said time-triggered schedule and based on a set of scheduling constraints, resulting in upper and lower bounds for each execution interval,
• for example by iteratively increasing, starting with the execution interval of a first job of a task from said time-triggered schedule for said core, the execution interval while checking that the scheduling constraints are fulfilled, and
• once in an iteration at least one scheduling constraint is not fulfilled, determine the extended execution interval of the previous iteration as the flexibility interval for said first job,
• selected as first job until all jobs have been provided a flexibility interval,
selecting a next job and repeating the method until all jobs have been provided with a flexibility interval.
